# EUROPEAN PATENT SPECIFICATION

(11) **EP 2 752 460 B1**
(45) Date of publication and mention of the grant of the patent: **10.01.2018**
(21) Application number: 12826932.1
(22) Date of filing: 31.08.2012
(51) Int. Cl.: C08L 93/00, C08F 2/44, C08F 251/02, C08K 7/02

(54) **MOLDING MATERIAL AND MOLDED ARTICLE USING THE SAME**
FORMMASSE UND DARAUS HERGESTELLTER FORMKÖRPER
MATIÈRE DE MOULAGE ET ARTICLE MOULÉ À L'AIDE DE LADITE MATIÈRE

(30) Priority: 31.08.2011 JP 2011190209
(43) Date of publication of application: 09.07.2014
(73) Proprietor: TOKYO METROPOLITAN INDUSTRIAL TECHNOLOGY RESEARCH INSTITUTE, Tokyo 135-0064 (JP)
(72) Inventor: KINOSHITA, Toshio, Tokyo 135-0064 (JP); JO, Nobuaki, Tokyo 135-0064 (JP); MITSUO, Atsushi, Tokyo 135-0064 (JP); TAKAHASHI, Chiaki, Tokyo 135-0064 (JP)
(74) Representative: Arends, William Gerrit
(86) International application number: PCT/JP2012/072217
(87) International publication number: WO 2013/031971

(56) References cited:
- JP-A- 2005 089 538
- JP-A- 2006 008 887
- US-A- 3 585 159

## Description

### Technical Field

The present invention relates to a molding material and a molded article using the same.

### Background Art

Lacquer (called "urushi" in Japanese) is the liquid resin which oozes out of lacquer trees. A major component thereof, urushiol (a catechol derivative), is cured through oxidative polymerization at room temperature (15-25°C) / high humidity (65-85%RH) with the effect of a slight amount of enzyme (laccase) included in the lacquer. While lacquer in lacquer trees growing in areas such as Japan and China includes the above-mentioned urushiol as its major component, lacquer in lacquer trees growing in areas such as Taiwan and Vietnam, etc., includes laccol as its major component, and lacquer in lacquer trees growing in areas such as Thailand and Myanmar, etc., includes thitsiol as its major component. Such laccol and thitsiol are also cured through oxidative polymerization in the same way as urushiol. In lacquerware, i.e., lacquer-coated articles, a lacquer coating formed by such curing on the surface of the base material, which is typically made of wood, protects the base and provides color tone with a unique depth, so that lacquerware can be used for tableware, equipment such as furniture and fixtures, and craftwork, etc.

However, the process for manufacturing a lacquer-coated article requires many steps, including base treatment of a wooden base as a base material, a base coating, intermediate coating and top coating, as well as time for drying. A high level of skill is necessary for such operation and the raw material lacquer itself is expensive. Further, when processing wood used as a base material of lacquerware for the production of, for example, tableware, such processing of wood is not necessarily suited for mass production and this limits the production scale of lacquerware and the applications thereof. Furthermore, the lacquer coating operation can cause skin disorders (lacquer rash) for the workers due to their allergic reaction to urushiol.

Meanwhile, petroleum-based synthetic materials suitable for compression molding processing, such as phenol resins, urea resins and polycarbonates, etc., have been used in recent years as base materials for ordinary mass-produced tableware. However, some of these materials are suspected of releasing components which are toxic to human bodies or causing the elution of endocrine-disrupting chemicals, and their use has become a social issue.

Thus, it is still considered desirable to use lacquer, wood and other plant fiber materials, i.e., natural resources, as the base materials for tableware, etc. Developing processing technology that allows for the mass-production of articles having an almost equal appearance and quality to those of conventional lacquerware even when using natural resources for a molding material is considered as being an effective way to expand the applications of lacquer and develop related industries.

For molding materials obtained using natural resources as raw materials, for example, Patent Document 1 describes a molding material and a molded article proposed by the present inventors, the molding material and molded article enabling mass-production thereof and being stable and manageable even if only natural resources, such as lacquer and plant fibers, are used as raw materials without using any petroleum-derived chemical substances.

Patent Document 2 describes a wood-based magnetic material formed from lacquer and magnetic powder or magnetic fluid, and a wooden material obtained by mixing and molding lacquer, wood powder and magnetic material.

Patent Document 3 describes biodegradable plastic which is constructed by mixing the main material produced by breaking a 100% natural material, such as plant fibers, into pieces with a binder made of a 100% natural material, such as lacquer, through water, and drying and solidifying the mixture into a predetermined form.

Patent Document 4 describes a photocatalytic wooden synthetic material composition obtained by mixing 10-40 wt% of titanium oxide with 10-60 wt% of a crushed cellulose-based substance, such as wood powder, having a water content of 0.5 wt% or less and an average particle diameter of 15-200 µm, and 20-80 wt% of resin.

Patent Document 5 describes a molding compound using Japanese lacquer and vegetable fiber, and Japanese lacquer/vegetable fiber molded articles obtained using the molding compound.

### Prior Art References

### Patent Documents

Patent Document 1: JP3779290 B
Patent Document 2: JPH07-263214 A
Patent Document 3: JP2005-023262 A
Patent Document 4: JPH11-172112 A
Patent Document 5: JP2005-089538

### Summary of the Invention

### Problem to be Solved by the Invention

As already described above, currently, the development of organic molding materials that do not use petroleum, which is an underground resource that will be depleted some time in the future, is an issue facing humankind at large. Further, some forms of equipment made of plastic have problems of elution of formaldehyde or endocrine-disrupting chemicals which are harmful to the human body and the influences of such chemical substances on the human body have become social problems.

In response to the above problems, as described in Patent Document 1 mentioned above, the present inventors have already developed a stable and manageable molding material obtained using only natural materials as raw materials and a molded article using the above molding material, such molding material and molded article further expanding the applications of lacquer, which is used for the coating of lacquerware in the form of tableware, equipment, etc., and having no risks of adverse effects to the human body or environmental pollution caused by chemical substances.

However, there is room for improvement in such molding material obtained using only natural resources as raw materials; for example, fluidity during the manufacture thereof is insufficient and respective raw materials may cause clinging (seizing) to the mixing machine. Further, such conventional molding material requires a pulverizing step to make the molding material in a powdered form having a particle size appropriate for raw materials to be used for the formation of molded articles. Thus, further simplifying the manufacturing process is desirable.

Accordingly, an object of the present invention is to provide a powdered molding material having a favorable particle size and further improved moldability, wherein, during the manufacture thereof, a raw material mixture shows good fluidity and the clinging of the respective raw materials to the mixing machine can be prevented, even if the molding material is obtained using natural resources (biomass), such as lacquer and plant fibers as described above, as raw materials.

### Means for Solving the Problem

In view of the above-described problems, the present inventors carried out intensive studies and, as a result, the present inventors have found that, by mixing specific amounts of lacquer, plant fibers and molding additive and kneading them by a specific method, the raw material mixture shows good fluidity during manufacture and clinging of each raw material to a mixing machine can be prevented, thereby completing the present invention.

Namely, the present invention provides a powdered molding material as defined in claim 1. Further possible features according to the present invention are defined in the dependent claims.

The present invention also provides a method for manufacturing a powdered molding material as defined by claim 6.

The present invention also provides a molded article obtained by compression-molding a molding material as defined in claim 7.

### Effect of the Invention

According to the present invention, even when using natural resources, such as lacquer and plant fibers, as raw materials, a powdered molding material having a favorable particle size and further improved moldability can be obtained, wherein, during the manufacture thereof, a raw material mixture shows good fluidity and the clinging of respective raw materials to a mixing machine can be prevented. In particular, not only in the case where lacquer having urushiol as its major component is used as a raw material together with natural resources such as plant fibers, but also in the case where lacquer having laccol or thitsiol as its major component is used as a raw material together with natural resources such as plant fibers, a powdered molding material having a favorable particle size and further improved moldability can be obtained, wherein, during the manufacture thereof, a raw material mixture shows good fluidity and the clinging of respective raw materials to a mixing machine can be prevented. As a result, the efficiency (moldability) when obtaining a molded article from the above molding material can be improved. In addition, a molded article made using a molding material having the characteristics set forth above can be obtained.

### Brief Description of the Drawings

Fig. 1 is a plotted chart showing an example of the relationship between an acetone-soluble matter and power supplied to drive rotating blades for use in kneading lacquer and plant fibers.
Fig. 2 is a schematic view showing an example of a mold used in the present embodiment.

### Mode for Carrying out the Invention

An embodiment of the present invention (hereinafter referred to as the "present embodiment") will be specifically described below. The present invention is not limited to the below-described embodiment and can be carried out with various modifications within the scope defined by the claims.

### «Molding Material»

The molding material of the present embodiment is a powdered molding material obtained by three-dimensionally kneading, while heating, raw materials including 10-85% by mass of lacquer, 10-85% by mass of plant fibers and 5-50% by mass of a molding additive, so that part of a major component of the lacquer is thermally polymerized, wherein the major component of the lacquer is one or more types selected from the group consisting of urushiol, laccol and thitsiol.

The present inventors have already proposed, in Patent Document 1, kneading lacquer and plant fibers and thereby providing a molding material and a molded article using only natural resources as raw materials. In a kneaded mixture of lacquer and plant fibers, however, lacquer is usually likely to aggregate and form lumps due to its inherent viscosity without fully polymerizing with plant fibers. Thus, a step of pulverizing such lumps in the kneaded mixture is performed.

In contrast, since a three-dimensional kneading method in which three-dimensional movements (which can also be called steric movements) are dominant in the movements of the mixture due to kneading is adopted in the present embodiment, the resulting mixture of lacquer and plant fibers constitutes a powder having a particle size suitable for a molding material, and thus, no pulverizing step is required.

Specifically, the wording "(to) knead three-dimensionally" used in the present embodiment means not a kneading wherein two-dimensional, or planar, movements of the mixture are dominant, but a kneading wherein movements in multiple directions including vertical, horizontal and oblique directions, (i.e., steric movements) are dominant. Examples of a mixing machine that enable such three-dimensional kneading include a fluid-type mixing machine (a Henschel mixer), a high-speed fluid-type mixer, and a Schugi mixer. By kneading a mixture of lacquer and plant fibers three-dimensionally, a molding material in a powdered form having a suitable particle size can be obtained without a pulverizing step. The major reason for this is thought to be as follows: when the mixture is kneaded three-dimensionally, strong convection, dispersion and shearing/mixing effects are applied to the kneaded mixture, which breaks, binds, or rounds the kneaded mixture to form powder having a suitable particle size. However, the reasons for this are not limited to the above.

The mixing machine (for example, a fluid-type mixing machine) used in the present embodiment preferably has a mixing tank with a jacketed structure and is preferably configured such that high-temperature oil or steam circulates inside the jacket. With this configuration, the mixture can be not only kneaded three-dimensionally but also heated from the side of the mixing tank, and advantageous effects can be obtained in the formation of powder having a suitable particle size.

Further, in the present embodiment, by adding, as a raw material, a specific amount of a molding additive to the lacquer and plant fibers, the fluidity of the raw material mixture during the above three-dimensional kneading step is improved, thereby preventing the clinging of the raw materials to the mixing machine. As a result, granulation properties during the kneading step can be further improved and a powdered molding material which is dry at room temperature and has a suitable particle size can be obtained. In addition, the efficiency (moldability) when manufacturing a molded article using the molding material can be improved.

In the molding material of the present embodiment, it is preferable that the lacquer and plant fibers are three-dimensionally kneaded using one or more rotating blades provided in a mixing machine. Due to the effects (convection, dispersion, and shearing/mixing) caused by the rotation of the rotating blades, a powdered molding material having a favorable particle size can be obtained more efficiently. It is more preferable for the mixing machine to have two or more rotating blades. The mixing machine having two or more rotating blades can further ensure the three-dimensional kneading of the mixture, which accordingly further ensures that a powdered molding material having a favorable particle size can be obtained. From the same viewpoint as above, it is even more preferable for the two or more rotating blades to be arranged to have the same rotation axis. Examples of such mixing machines include a fluid-type mixing machine (a Henschel mixer; e.g., a Mitsui FM mixer manufactured by Mitsui Mining Co., Ltd.), a high-speed fluid-type mixer (e.g., a mixing machine manufactured by KAWATA MFG Co., Ltd.) and a Schugi mixer (e.g., a vertical mixer manufactured by Kanto Kongoki Industrial Co., Ltd.).

The number of revolutions of the rotating blades may be changed as appropriate depending on the type and scale of the mixing machine in which the blades are provided. The number of revolutions is not particularly limited and may be set to, for example, 100 to 1000 rpm. If the number of revolutions of the rotating blades is within the above range, three-dimensional kneading of the lacquer, plant fibers and molding additive is performed more properly so that a powdered molding material having a favorable particle size can be obtained. The reason for this is thought to be that the convection and dispersion effects of the rotating blades can be obtained in a sufficient manner and the flow resistance of the kneaded mixture can be suppressed. However, the reasons for this are not limited to the above.

In the molding material of the present embodiment, it is preferable that kneading is performed at a heating temperature in a range from 90°C to 180°C, and more preferably at a heating temperature in a range from 120°C to 160°C. If the heating temperature is within the above range, polymerizable monomers in the lacquer component properly cause thermal polymerization, resulting in a molding material of high quality.

The time of the kneading depends on the above-mentioned heating temperature, etc., and it is preferable to set the kneading time as appropriate within the range of 30-120 minutes.

It is preferable for the molding material of the present embodiment to be obtained by measuring the power supplied to drive the rotating blades and stopping kneading according to a change with time of such power value. This further ensures that a suitable molding material having a favorable particle size can be obtained. The following is a detailed explanation thereof.

When three-dimensionally kneading, while heating, lacquer, plant fibers and a molding additive in a mixing machine having rotating blades, the value of power supplied to drive the rotating blades changes as the fluidity (and, therefore, the viscosity) of the mixture of the lacquer, plant fibers and molding additive in the mixing machine changes. By watching a change with time of such power value, a point in time when the mixture of the lacquer, plant fibers and molding additive is in a suitably powdered form, in other words, a point in time to stop kneading, can be determined.

An example of such change with time of the power value will be described below. Firstly, when lacquer is gradually provided into the mixing machine which contains plant fibers and a molding additive therein, the lacquer starts to mix with the plant fibers and this reduces the fluidity (increases the viscosity) of the mixture, so that the power value increases. When the mixing of the lacquer with the plant fibers has finished, the fluidity of the mixture increases (the viscosity decreases) and the power value decreases. This is thought to be due to the evaporation of water contained in the lacquer and the increase in temperature in the mixing machine. After that, when the polymerization of the polymerizable monomers, e.g., urushiol, in the lacquer component proceeds by way of heating and the molecular weight of the resulting polymer increases, the fluidity of the mixture decreases (the viscosity increases) and the power value increases. When kneading is further continued, the fluidity of the mixture again starts increasing (the viscosity starts decreasing) and the power value starts decreasing at a certain point in time (maximum point). This maximum point appears to be the point in time when the mixture of the lacquer, plant fibers and molding additive forms a powder. The fluidity of the mixture thereafter increases (the viscosity decreases) and the power value continues decreasing. It is preferable to set a point in time to stop kneading at some time after that turning point.

The molding material of the present embodiment preferably includes 9-15% by mass, and more preferably 10.5-13% by mass, of acetone-soluble matter. Acetone-soluble matter has been considered to serve as an indicator for polymerizable monomers, such as urushiol, etc. (see, for example, JP3779290B). The present inventors have now clarified that the polymerizable monomers decrease due to the thermal polymerization thereof and that polymers, in turn, increase, thereby reducing the acetone-soluble matter. In other words, the present inventors have clarified the relationship of such acetone-soluble matter with the productivity of the molding material of the present embodiment, and, by referring to such relationship, the present inventors have enabled the molding material of the present embodiment to be produced efficiently. By using a molding material which includes acetone-soluble matter within the above-mentioned range, a molded article with improved flexural strength can be stably obtained.

In the present embodiment, the acetone-soluble matter can be measured by a method which will be described later in the Examples.

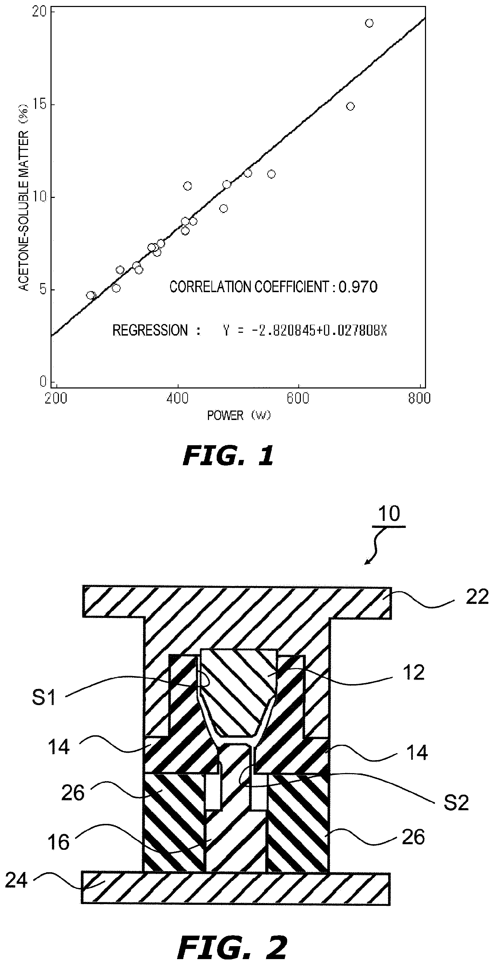

The value of power supplied to drive the rotating blades is considered to have a correlation with the acetone-soluble matter in the resulting molding material. For example, it appears that, with regard to same lot raw lacquer from each country, there is a correlation which can be represented by a linear regression. Fig. 1 shows an example of the relationship (plotted chart) between the power supplied to drive the rotating blades and the acetone-soluble matter when a molding material was manufactured from lacquer and plant fibers using a fluid-type mixing machine. It can be found from Fig. 1 that the correlation thereof has a correlation coefficient of 0.970, which indicates a very favorable correlation.

Thus, a molding material having a suitable range of acetone-soluble matter can be stably obtained by controlling the power value supplied to drive the rotating blades in the manufacture of the molding material.

In the present embodiment, the particle size of the powder is more favorable (suitable) if a larger percentage of the powder has almost the same diameter. This is based on the viewpoint of allowing, when filling a mold with a powdered molding material in order to mold such material, a small amount of the molding material to enter a space of the mold (e.g., a space formed between respective mold members if the mold has such several mold members) which should not be filled with the molding material, so as to cause several burrs to be formed, thereby enhancing moldability. For example, the molding material of the present embodiment is preferably a powder that passes through a 10-300 mesh sieve, more preferably a powder that passes through a 10-120 mesh sieve, and, in view of moldability, even more preferably a powder that passes through a 60-100 mesh sieve. The powdered molding material with a particle size within the above range shows favorable moldability, in other words, it is possible to allow a small amount of the molding material to enter a space of the mold, and burrs will be formed appropriately. Thus, such molding material is suitable as a material for forming a compression-molded article, which will be described later. It should be noted that the burrs formed as above can be removed after the molded article is taken out from the mold.

The molding material of the present embodiment is a powdered molding material which includes: 10-85% by mass of a lacquer component including a polymer of one or more monomers selected from the group consisting of urushiol, laccol and thitsiol; 10-85% by mass of plant fibers; and 5-50% by mass of a molding additive, and which is a powder that passes through a 10-300 mesh sieve. Such molding material has a favorable particle size, so that entry into a space of the mold can be more sufficiently suppressed. A molding material as such can be obtained by, for example, the above-described manufacturing method.

The structure and particle size of the molding material in the present embodiment can be determined by methods described later in the Examples.

Examples of the plant fibers used in the present embodiment include wood fiber, such as cellulose of ordinary tree species, including *sugi* (Japanese cedar), *hinoki* (Japanese cypress), *tsuga* (Japanese hemlock), empress, pine and spruce trees. Other than wooden base materials, materials containing bamboo, reed, cotton and other plant-based fibers may also be used. The above plant fibers may be used singly or in combination of two or more types. The plant fibers are preferably a powder having a particle size of 10-300 mesh. If the plant fibers are broken into pieces by, for example, a mill, the fibers are fibrillated and lacquer can easily penetrate into such fibrillated fibers during kneading so that a homogenous mixture of lacquer and plant fibers can be obtained.

Examples of the lacquer used in the present embodiment are limited to lacquer containing, as its major component, one or more monomers selected from the group consisting of urushiol, laccol and thitsiol. Here, the term "major component" means that the proportion of the component in the entirety of the lacquer is 56% by mass or more, and the proportion is preferably 60% by mass or more. The above lacquers may be used singly or in combination of two or more types.

The molding additive used in the present embodiment is not particularly limited, as long it can improve granulation properties in the kneading step, as described above, and examples thereof include thermally-conductive materials (materials having thermal conductivity) and thermosetting resins (resins that exhibit extensibility when heated (resins having thermo plasticity)). These molding additives may be used singly or in combination of two or more types.

Examples of the thermally-conductive materials include carbon-based materials (e.g., carbon nanotubes), diamond powder, silver, copper, gold, aluminum, silicon, brass, iron, platinum, titanium oxide and stainless steel. These thermally-conductive materials are thought to exhibit, when heated during the heating/pressing operation, the effect of facilitating homogenous penetration of the lacquer component into the plant fibers. Accordingly, moldability can be improved by adding such thermally-conductive materials as a molding additive. Further, metals (e.g., silver, copper, gold, aluminum, brass, iron, platinum and stainless steel) of the above-mentioned thermally-conductive materials usually have electrical conductivity. By adding metals having such properties as the molding additive, it is expected that the resulting molding material will reduce radio wave interference. Such molding materials can be utilized as materials for forming cases for mobile phones and electronic devices such as personal computers.

Further, titanium oxide exhibits, when heated (or exposed to ultraviolet radiation, etc.), n-type semiconductor-like electrical conductivity. Accordingly, by adding titanium oxide having such properties as a molding additive, the resulting molding material is expected to reduce radio wave interference, as described above, and also expected to exhibit a photocatalytic antifouling function and water repellant effect.

Examples of thermosetting resins (resins having extensibility when heated (thermo plasticity)) typically include polymer resins such as polyethylene and polystyrene. From the viewpoints of placing importance on naturally-occurring materials and utilizing biomass effectively, biodegradable resins (bioplastic) are preferable as thermosetting resins used in the present embodiment. Examples of biodegradable resins include polylactic acid, polycaprolactone, polyhydroxyalkanoate, polyglycolic acid, and modified vinyl alcohol.

These molding additives are all thought to contribute to the improvement of granulation properties during the kneading step, as described above. The "granulation properties" used herein refer to properties related to the "free-flowing state (fluidity) of each raw material mixture during the kneading step" and "prevention of the clinging of the raw materials to the inner wall of the mixing tank (clinging resistance) during the kneading step." In other words, when it is said that granulation properties are good, it means that each raw material flows freely and the raw materials do not cling so much to the inner wall of the mixing tank during the kneading step. Such good granulation properties are expected to result in obtaining a molding material with a favorable particle size at high yield and further achieving high efficiency in manufacturing a molded article using the above molding material.

Although the mechanism of such improvement of granulation properties by way of the thermally-conductive materials is not clear, the present inventors believe as follows. If a thermally-conductive material disperses throughout the lacquer component and plant fibers, such as wood powder, during the kneading thereof, the thermal effect during heating can be given entirely to the respective components so that the lacquer component can efficiently and homogenously penetrate into the plant fibers, resulting in improvement in granulation properties. As a result, the obtained molding material is expected to have excellent moldability. When using titanium oxide for such thermally-conductive material, it is preferable to mix it so that its content is 5-15% by mass in the raw materials of the molding material. With this content, the above-described thermally-conductive material effects can be given more effectively and, furthermore, it is possible to more effectively suppress the photolytic function of the titanium oxide being strongly exerted and thereby affecting the properties of the molding material.

Meanwhile, although the mechanism of improving the granulation properties by way of the thermosetting resins (e.g., bioplastic) is not clear, the present inventors believe that thermosetting resins can assist, due to their thermo plasticity, with enhancing the extensibility of a (powdered) molding material which has a low extensibility and that the obtained molding material consequently has excellent moldability.

The molding additive preferably has a particle size of 5-150 mesh and more preferably has a particle size almost equal to or smaller than the particle size of the plant fibers. By using the molding additive having a particle size within the above range, the infiltration properties of the lacquer component can be improved.

The content of the molding additive in the raw materials is 5-50% by mass and preferably 10-40% by mass. If the content of the molding additive in the raw materials is within the above range, the granulation properties during the kneading step can be improved and a powdered molding material which is dry at room temperature and has a favorable particle size can be obtained. In addition, the efficiency (moldability) when manufacturing a molded article using the molding material can be improved.

The content of the lacquer in the raw materials is 10-85% by mass and preferably 30-70% by mass.

The content of the plant fibers in the raw materials is 10-85% by mass and preferably 30-70% by mass.

The mixing ratio between the lacquer and plant fibers is preferably 1:9 to 9:1 and more preferably 3:7 to 7:3 by weight. If the mixing ratio between the lacquer and plant fibers is within the above range, a powdered molding material having a suitable particle size and excellent moldability is likely to be obtained and a molded article obtained by compression-molding the molding material is likely to have excellent flexural strength.

In the present embodiment, the lacquer, plant fibers and molding additive may be provided into the mixing machine before the above-described three-dimensional kneading. The lacquer, plant fibers and molding additives may be provided into the mixing machine at the same time, or each may be provided separately. Preferably, the plant fibers are provided into the mixing machine first and the lacquer is provided next. By first providing the plant fibers into the mixing machine, a powdered molding material having a suitable particle size is likely to be obtained. When providing the plant fibers first into the mixing machine, the time of providing the molding additive is not particularly limited.

When providing the plant fibers first into the mixing machine, it is preferable to carry out a step of preliminarily kneading the plant fibers three-dimensionally while heating them. The heating temperature in the preliminary kneading step is preferably 50-90°C and more preferably 60-80°C. Further, if the mixing machine has rotating blades, it is preferable for the rotation speed of the rotating blades in the preliminary kneading step to be lower than the rotation speed of the rotating blades in the above-described kneading step.

When providing the plant fibers first and providing the lacquer next into the mixing machine to manufacture a molding material under the above-described conditions, a powdered molding material having a more suitable particle size and excellent moldability is likely to be obtained and a molded article obtained by compression-molding such molding material is likely to have excellent flexural strength.

The molding material of the present embodiment is a powdered molding material that has a favorable particle size and excellent moldability, wherein, during the manufacture thereof, a raw material mixture shows good fluidity and the clinging of respective raw materials to a mixing machine can be prevented, despite the molding material being made using natural resources, such as lacquer and plant fibers, as raw materials. Such molding material, not only that obtained by using lacquer having urushiol as its major component, but also that obtained by using lacquer having laccol or thitsiol as its major component, can be used as a raw material to obtain a molded article by compression-molding the molding material.

### <<Method for Manufacturing Molding Material>>

The method for manufacturing the powdered molding material of the present embodiment is not particularly limited, as long as it includes the step of three-dimensionally kneading, while heating, raw materials including 10-85% by mass of lacquer, 10-85% by mass of plant fibers and 5-50% by mass of a molding additive, so that part of a major component of the lacquer is thermally polymerized. According to the manufacturing method of the present embodiment, a powdered molding material having a suitable particle size and further improved moldability, wherein, during the manufacture thereof, a raw material mixture shows good fluidity so that the clinging of respective raw materials to a mixing machine can be prevented, can be obtained without performing a pulverizing step, and without going through a lumpy state. In other words, according to the manufacturing method of the present embodiment, even if a molding material is made using natural resources, such as lacquer and plant fibers, as raw materials, a powdered molding material having a favorable particle size and further improved moldability can be efficiently obtained, wherein, during the manufacture thereof, a raw material mixture shows good fluidity so that the clinging of respective raw materials to a mixing machine can be prevented. As a result, the efficiency (moldability) in manufacturing a molded article can be improved. Further, such molding material obtained by the manufacturing method of the present embodiment, not only that obtained by using lacquer having urushiol as its major component, but also that obtained by using lacquer having laccol or thitsiol as its major component, can be used to obtain a molded article.

The mixing machine and various conditions used in the method for manufacturing the molding material of the present embodiment are almost the same as those described in <<Molding Material>> above.

An apparatus for manufacturing the powdered molding material of the present embodiment preferably includes: a mixing machine comprising a vessel for receiving lacquer and plant fibers therein and one or more rotating blades provided in the vessel, to three-dimensionally knead, while heating, lacquer and plant fibers; a power meter that measures power supplied to drive the rotating blade; and a controller that controls the rotation speed of the rotating blade based on the value of the power. With the above manufacturing apparatus, a powdered molding material having a suitable particle size and excellent moldability can be obtained stably and efficiently, as has already been described above. The controller calculates a suitable rotation speed of the rotating blades based on the obtained power value and controls the rotation speed manually or automatically according to the calculation. In the above manufacturing apparatus, the mixing machine is not particularly limited, as long as it has a vessel and rotating blades as described above, and it may be a known type. Further, the power meter is not particularly limited, as long as it is connected to the mixing machine so as to measure power supplied to drive the rotating blades, and it may be a known type. Still further, the controller is not particularly limited, as long as it can control the rotation speed of the rotating blades and it may be a known type.

### «Molded Article»

A compression-molded article of the present embodiment is obtained by compression-molding the above-described molding material. Molded articles obtained as such, not only in the case where lacquer having urushiol as its major component is used but also in the case where lacquer having laccol or thitsiol as its major component is used, can be suitably used for various applications. For example, if wood fibers are used as plant fibers, the molded article of the present embodiment has a wood material feeling and can be used as is for, by way of example, equipment and various kinds of industrial materials. However, for applications that require a beautiful appearance and improved water resistance, it is preferable to further apply a lacquer coating on the surface thereof. In that case, since the above-described molding material, acting as a raw material of the molded article, has lacquer as its major component, a lacquer coating fits quite well with the compound material and various base processes performed in the conventional coating processing can be omitted.

Furthermore, if final heating treatment is carried out for the molded article obtained as above, the major component of the lacquer is completely cured so as to improve contact with the base. Further, the active groups in urushiol, laccol or thitsiol disappear so that it appears that there is almost no risk of lacquer rash for the user. The obtained molded article is sufficient for practical use.

When using, for example, a high-speed fluid-type mixer manufactured by KAWATA MFG Co., Ltd., for the mixing machine, three-dimensional kneading can be achieved by causing streaming movement by the rotation of the rotating blades and also by performing agitation while vibrating the mixing vessel. Accordingly, even when using such a mixing machine, it is still possible to obtain a powdered molding material having a favorable particle size by using natural resources (biomass), such as lacquer and plant fibers, as raw materials. In addition, such molding material, not only that obtained using lacquer having urushiol as its major component, but also that obtained using lacquer having laccol or thitsiol as its major component, can be used as a raw material to obtain a molded article.

### «Method for Manufacturing Molded Article»

A compression molding method can be used as the method for manufacturing the molded article of the present embodiment. If the molded article is a food container (tableware) or a case for a mobile phone or a personal computer, etc., and, in particular, if it is a food container, it is preferable for the manufacturing method of the molded article to include the step of compression-molding a molding material with a mold to obtain a molded article, wherein: the mold has at least two sections, being an upper mold and a lower mold arranged to face the upper mold; the upper mold and the lower mold each have a degassing structure; and a pressing operation and a degassing operation are performed in the compression-molding. The manufacturing method will be specifically described below.

### <Mold>

The mold used in the present embodiment is not particularly limited and examples thereof include molds for food containers (tableware) and molds for cases for mobile phones and personal computers, etc. Examples of molds for food containers include molds for *sake* cups, molds for bowls and molds for plates.

The mold used in the present embodiment has at least two portions, an upper mold and a lower mold arranged to face the upper mold, and the upper mold and the lower mold each have a degassing structure. Preferably, the mold has at least three sections - an upper mold, a lower mold arranged to face the upper mold and an intermediate mold sandwiched between the upper mold and the lower mold - and the degassing structure is preferably provided in at least two locations, one between the upper mold and the intermediate mold and one between the lower mold and the intermediate mold. Fig. 2 shows a schematic cross-sectional view of one example of such mold.

The mold 10 shown in Fig. 2 is a mold for manufacturing a *sake* cup and such mold 10 has an upper mold 12, a lower mold 16 arranged to face the upper mold 12, and an intermediate mold 14 sandwiched between the upper mold 12 and the lower mold 16. The upper mold 12 is a section (mold member) for forming, together with the intermediate mold 14, the container portion (rim, upper body, lower body, shoulder (foot connecting portion) and bottom) of the *sake* cup and such upper mold 12 has a shape suitable to press, from inside, the container portion of the *sake* cup during molding. The intermediate mold 14 is a section (mold member) for forming, together with the upper mold 12, the container portion (rim, upper body, lower body, shoulder and bottom) of the *sake* cup and also for forming, together with the lower mold 16, the bottom and foot of the *sake* cup, and such intermediate mold 14 has a shape suitable for receiving the container portion and the foot of the *sake* cup from outside during molding. The lower mold 16 is a member (mold member) for forming, together with the intermediate mold 14, the foot and the bottom of the *sake* cup and such lower mold 16 has a shape suitable for forming such portions.

The mold 10 has a space S1 between the upper mold 12 and the intermediate mold 14, other than the portion for forming the *sake* cup, and the space S1 preferably has a size that does not allow the molding material to enter the space. Gas that is generated by heating and pressing during molding can easily exit through the above space. The mold 10 also has a space S2 between the intermediate mold 14 and the lower mold 16, other than the portion for forming the *sake* cup, and the space S2 preferably has a size that does not allow the molding material to enter the space. Through this space as well, gas that is generated by heating and pressing during molding can easily exit. The mold 10 also has: an upper mold attaching plate 22 to which the upper mold 12 is attached and fixed and which is used to press the upper mold 12, the intermediate mold 14 and the lower mold 16 from above; a lower mold attaching plate 24 to which the lower mold 16 is attached and fixed and which is used to press the upper mold 12, the intermediate mold 14 and the lower mold 16 from below; and a spacer block 26 that supports the intermediate mold 14 to hold it at a predetermined height.

By using the mold 10 having the above structure, gas is less likely to remain in the mold 10, even when using, for example, a molding material obtained from lacquer, plant fibers and a molding additive as a raw material, and this results in suppressing the occurrence of molding sinks and obtaining a molded article having an even surface and a good appearance.

### <Compression Molding Conditions>

In the method for manufacturing a molded article of the present embodiment, it is preferable to perform a pressing operation and a degassing operation in the compression-molding and it is more preferable to repeatedly perform the pressing operation and degassing operation several times in an alternating fashion. Preferably, the pressure is gradually increased to a predetermined pressure over the several times of repeated operation. Here, several times means two or more times, and preferably three or more times.

In the several times of pressing operation, it is preferable that the pressure is increased sequentially in each pressing operation from the first pressing operation through the last pressing operation. As a result, a molded article having a higher level of mechanical strength can be manufactured at a further enhanced yield.

For example, the pressure at the time of the last pressing operation is preferably 10-70 MPa.

For example, the time of the last pressing operation is preferably 10-120 minutes.

For example, the temperature at the compression molding is preferably 100-180°C.

By setting the compression molding conditions as described above, the occurrence of molding sinks can be suppressed and a molded article having an even surface and good appearance can be obtained, even by using, for example, a molding material obtained from lacquer, plant fibers and a molding additive as a raw material.

The specific procedures and operations of the compression molding are not particularly limited, as long as the above-described mold is used and the above-described compression molding conditions are preferably adopted, and the same procedure and operation as those in conventional art may be used.

### Examples

Hereinafter, the present invention will be specifically described according to Examples; however, the present invention is not limited by these Examples. The following components were used in the Examples and Comparative Examples.

### 1) Lacquer

### (a) Lacquer type: Chinese raw lacquer

Lacquer composition: 75.6% by mass of urushiol, 13.5% by mass of water, 9.0% by mass of nitrogen-containing matter and 1.9% by mass of gum

### (b) Lacquer type: Vietnamese raw lacquer

Lacquer composition: 79.4% by mass of laccol, 3.0% by mass of water, 2.5% by mass of nitrogen-containing matter and 13.9% by mass of gum

The lacquer composition was determined in accordance with the method of analyzing lacquer liquid compositions (prepared by the Coating Engineering Subcommittee of the Joint Committee on Material and Chemical Engineering).

### 2) Plant Fibers

Plant fiber type: *Sugi* (Japanese cedar) wood powder (100% made from forest thinnings produced by Tonami Forestry Cooperative in Toyama Prefecture, product passing 100 mesh size)
(i) Particle size: more than 330 mesh - 19.7% by mass, 330-200 mesh - 22.6% by mass, 200-150 mesh - 25.4% by mass, 150-100 mesh - 25.9% by mass, 100-80 mesh - 5.6% by mass, and less than 80 mesh - 0.8% by mass
(ii) Water content: 7.0% by mass
(iii) Bulk specific gravity: 1000 cm³/180g

The values shown in (i) to (iii) above are based on data from Tonami Forestry Cooperative.

### 3) Molding Additive

(a) Copper powder (manufactured by Kanto Chemical Co., Inc.)
(b) Titanium oxide (manufactured by Kanto Chemical Co., Inc.)
(c) Polylactic acid (manufactured by Teijin Limited)

### (Measurement Methods for Various Properties)

### <Acetone-soluble Matter>

The acetone-soluble matter (% by mass) in the molding material was measured in the following manner.

1 g of molding material was placed in a glass container with 25 ml of acetone therein and left overnight. After that, filtration was performed and the remaining substance was further mixed with 25 ml of acetone and left for two hours. Filtration was performed thereafter. The substance dissolved in the acetone after the two filtrations was left as is for five days in order to remove volatile components. After removing the volatile components, the weight of the substance dissolved in the acetone was measured and the acetone-soluble matter (% by mass) in the molding material was calculated from the above measured value and the initial weight (1 g) of the molding material.

### <Particle Size Distribution>

The molding material was sorted using a vibrating sieving machine (Sato's method vibrating sieving machine CB40-3SH, manufactured by Koei Sangyo Co., Ltd.) to measure a particle size distribution.

### [Example 1]

### (Manufacture of Molding Material)

Using a fluid type mixing apparatus (Mitsui FM20C/l, manufactured by Mitsui Mining Co., Ltd.), a molding material was produced as follows. The mixing apparatus included: a mixing machine having a vessel (a mixing tank having a volume of 20 L) for receiving lacquer, plant fibers and molding additive therein and two rotating blades provided within the vessel to have the same rotation axis (type of blades: CK for upper blade and AO for lower blade; size of rotating blades: ϕ 27 cm (upper side) and ϕ 26 cm (lower side)); a power meter (clamp power meter) for measuring the power supplied to drive the rotating blades; and a controller for controlling the rotation speed of the rotating blades based on the power value.

The vessel within the mixing machine was heated and when the temperature inside the vessel reached 50°C, 85 parts by mass of plant fibers were provided into the vessel together with 5 parts by mass of a molding additive (copper powder), and the lid of the vessel was closed. The rotating blades provided within the vessel were rotated at a speed of 200 rpm to preliminarily knead the plant fibers three-dimensionally. When the temperature inside the vessel reached 65°C, 10 parts by mass of lacquer held at room temperature (25°C) were gradually provided into the vessel for 2-15 minutes. When the temperature inside the vessel reached 100°C, the rotation speed of the rotating blades was increased to 600 rpm so as to three-dimensionally knead the lacquer, plant fibers and molding additive within the mixing machine while heating the mixture at 130°C.

During the kneading, the power supplied to drive the rotating blades was measured and the measured power value was recorded. After the point in time when the mixture of the lacquer and plant fibers was determined as having formed into a powder and become an appropriate molding material based on changes with time of the recorded power value, kneading continued to be performed for some time. Then, the rotation of the rotating blades and the heating inside the mixing machine were stopped, thereby stopping the kneading of the lacquer and plant fibers. The kneading time of the lacquer and plant fibers was 54 minutes 20 seconds. The obtained molding material was taken out from a discharge port of the mixing machine and cooled immediately.

The acetone-soluble matter in the obtained molding material was measured and found to be 12.26% by mass. Further, the obtained molding material was a powder including a polymer of urushiol (confirmed by a decrease in the amount of acetone-soluble matter), plant fibers and molding additive and the powder was dry at room temperature. The specific particle size distribution of the molding material was as follows: 87.2% by mass had a particle size exceeding 60 mesh.

Further, granulation properties (fluidity and clinging resistance) in the above kneading were evaluated using the below criteria. The results are shown in Table 1.

### (Evaluation Criteria for Fluidity)

Fluidity was evaluated according to the content of matter having a particle size of 50-150 mesh, as follows. In the evaluation, the sizes of the "lumps" were also considered.
S: Very good (the content was 70% or more and no lumps were formed.)
A: Good (the content was 60% or more and less than 70% and almost no lumps were formed.)
B: Not so good (the content was 50% or more and less than 60% and a small amount of lumps were formed.)
C: Bad (the content was less than 50% and lumps were formed.)

### (Evaluation Criteria for Clinging Resistance)

S: Very good (the raw materials caused no clinging to the mixing machine.)
A: Good (the raw materials caused almost no clinging to the mixing machine.)
B: Not so good (a small amount of raw materials caused clinging to the mixing machine.)
C: Bad (a large amount of raw materials caused clinging to the mixing machine.)

### [Examples 2-19 and Comparative Examples 1-6]

A molding material was manufactured in the same manner as in Example 1 except that the amount used and the type of each raw material were changed, as shown in Tables 1-4, and evaluated regarding the fluidity and clinging resistance. The results are shown in Tables 1-4.

### [Reference Examples 1 and 2]

### (Plant Fibers)

*Sugi* (Japanese cedar) having an average particle size of 100 mesh (commercially available product, broken into pieces by a mill; hereinafter called "wood fibers") was used in Reference Examples 1 and 2 as a plant fiber base material.

### (Lacquer)

For lacquer to be mixed with the above wood fibers to obtain a molding material, Chinese raw lacquer having a composition of 63.9% of urushiol, 9.7% of gum, 0.7% of total nitrogen and 25.7% of water was used.

### [Manufacture of Molding Material]

The above lacquer and wood fibers were mixed at a lacquer/wood fiber ratio of 50 parts by mass/50 parts by mass in Reference Example 1 and 10 parts by mass/90 parts by mass in Reference Example 2. The mixture was sufficiently kneaded in an automatic mortar for about 20 minutes, and then heated and dried in a hot air drying furnace at 120°C for 90 minutes (while agitation was performed at 5-10 minute intervals). After breaking the mixture into pieces in the mortar, sieving was performed to obtain a molding material with a particle diameter of 50-350 µm.

The obtained molding material was evaluated regarding fluidity and clinging resistance according to the above-mentioned criteria. In both Reference Examples 1 and 2, fluidity was good (A), while clinging resistance was not so good (B).

**[Table 1]**

| | | Ref. Ex. 1 | Ref. Ex. 2 | Ex. 1 | Ex. 2 | Ex. 3 | Ex. 4 | Ex. 5 | Ex. 6 | Ex. 7 | Comp. Ex. 1 | Comp. Ex. 2 |
|---|---|---|---|---|---|---|---|---|---|---|---|---|
| Lacquer liquid (major component) | Urushiol | 50 parts by mass | 10 parts by mass | 10 parts by mass | 85 parts by mass | 40 parts by mass | 45 parts by mass | 45 parts by mass | 45 parts by mass | 40 parts by mass | 5 parts by mass | 35 parts by mass |
| Plant fiber (*Sugi*: 100-mesh particle size) | | 50 parts by mass | 90 parts by mass | 85 parts by mass | 10 parts by mass | 10 parts by mass | 45 parts by mass | 45 parts by mass | 45 parts by mass | 40 parts by mass | 92 parts by mass | 10 parts by mass |
| Molding additive | Copper powder | - | - | 5 parts by mass | 5 parts by mass | 50 parts by mass | 10 parts by mass | - | - | - | 3 parts by mass | 55 parts by mass |
| | Titanium oxide | - | - | - | - | - | - | 10 parts by mass | - | 10 parts by mass | - | - |
| | Polylactic acid | - | - | - | - | - | - | - | 10 parts by mass | 10 parts by mass | - | - |
| Granulation properties | Fluidity | A | A | S | A | A | S | S | A | A | B | C |
| | Clinging | B | B | A | S | S | S | S | S | S | B | B |

**[Table 2]**

| | | Ex. 8 | Ex. 9 | Ex. 10 | Ex. 11 | Comp. Ex. 3 | Comp. Ex. 4 |
|---|---|---|---|---|---|---|---|
| Lacquer liquid (major component) | Laccol | 10 parts by mass | 85 parts by mass | 40 parts by mass | 45 parts by mass | 5 parts by mass | 35 parts by mass |
| Plant fiber (*Sugi*: 100-mesh particle size) | | 85 parts by mass | 10 parts by mass | 10 parts by mass | 45 parts by mass | 92 parts by mass | 10 parts by mass |
| Molding additive | Copper powder | 5 parts by mass | 5 parts by mass | 50 parts by mass | 10 parts by mass | 3 parts by mass | 55 parts by mass |
| Granulation properties | Fluidity | S | A | S | S | C | C |
| | Clinging | A | A | A | A | B | B |

**[Table 3]**

| | | Ref. Ex. 1 | Ref. Ex. 2 | Ex. 12 |
|---|---|---|---|---|
| Lacquer liquid (major component) | Urushiol | 50 parts by mass | 10 parts by mass | 25 parts by mass |
| | Laccol | - | - | 25 parts by mass |
| Plant fiber (*Sugi*: 100-mesh particle size) | | 50 parts by mass | 90 parts by mass | 40 parts by mass |
| Molding additive | Copper powder | - | - | 10 parts by mass |
| Granulation properties | Fluidity | A | A | S |
| | Clinging | B | B | A |

### Industrial Applicability

The molding material of the present invention is used as a suitable material for the mass-production of molded products made of lacquer and plant fibers as base materials. The molded product obtained using the above molding material can be used both as is and also as a basis to which a lacquer coating can be easily applied. Further, since the molding material of the present invention is manufactured by adding thermally-conductive materials or thermosetting resins as a molding additive to lacquer and plant fibers, it serves as a molding material having advanced features, such as the reduction of radio wave interference, catalytic antifouling effects, and improvement of water repellency and corrosion resistance, and the molding material is industrially applicable in such fields.

### Description of Reference Numerals

- 10: Mold
- 12: Upper mold
- 14: Intermediate mold
- 16: Lower mold
- 22: Upper mold attaching plate
- 24: Lower mold attaching plate
- 26: Movable spacer block
- S1, S2: Space

## Claims

1. A powdered molding material obtained by three-dimensionally kneading, while heating, raw materials comprising 10-85% by mass of lacquer, 10-85% by mass of plant fibers and 5-50% by mass of a molding additive, so that part of a major component of the lacquer is thermally polymerized, wherein the major component of the lacquer is one or more types selected from the group consisting of urushiol, laccol and thitsiol.

2. The molding material according to claim 1, wherein the plant fibers are a powder having a particle size of 10-300 mesh.

3. The molding material according to any one of claims 1 and 2, wherein the molding additive is one or more types selected from the group consisting of a thermally-conductive material and a thermosetting resin.

4. The molding material according to claim 3, wherein the thermally-conductive material is one or more types selected from the group consisting of carbon-based materials, diamond powder, silver, copper, gold, aluminum, silicon, brass, iron, platinum, titanium oxide and stainless steel.

5. A powdered molding material according to any one of claims 1 to 4, wherein the lacquer comprises a polymer of one or more monomers selected from the group consisting of urushiol, laccol and thitsiol and the molding material is a powder that passes through a 10-300 mesh sieve.

6. A method for manufacturing a powdered molding material, comprising a step of three-dimensionally kneading, while heating, raw materials including 10-85% by mass of lacquer, 10-85% by mass of plant fibers and 5-50% by mass of a molding additive, so that part of a major component of the lacquer is thermally polymerized, wherein the major component of the lacquer is one or more types selected from the group consisting of urushiol, laccol and thitsiol.

7. A molded article obtained by compression-molding a molding material according to any one of claims 1 to 5.

8. The molded article according to claim 7, wherein heating is further performed so that the major component of the lacquer is completely cured.

## Patentansprüche

1. Pulverförmige Formmasse, erhalten durch dreidimensionales Kneten, während des Erwärmens, von Rohmaterialien, umfassend 10-85 Masse% Lack, 10-85 Masse% Pflanzenfasern und 5-50 Masse% eines Formzusatzes, so dass ein Teil einer Hauptkomponente des Lacks thermisch polymerisiert wird, wobei die Hauptkomponente des Lacks ein oder mehrere Typen ist, ausgewählt aus der Gruppe, bestehend aus Urushiol, Laccol und Thitsiol.

2. Formmasse nach Anspruch 1, wobei die Pflanzenfasern ein Pulver mit einer Partikelgröße von Maschenzahl 10-300 sind.

3. Formmasse nach einem der Ansprüche 1 und 2, wobei der Formzusatz ein oder mehrere Typen ist, ausgewählt aus der Gruppe, bestehend aus einem thermisch leitendem Material und einem wärmehärtbaren Harz.

4. Formmasse nach Anspruch 3, wobei das thermisch leitende Material ein oder mehrere Typen ist, ausgewählt aus der Gruppe, bestehend aus kohlenstoffbasierten Materialien, Diamantenpulver, Silber, Kupfer, Gold, Aluminium, Silicium, Messing, Eisen, Platin, Titanoxid und Edelstahl.

5. Pulverförmige Formmasse nach einem der Ansprüche 1 bis 4, wobei der Lack ein Polymer eines oder mehrerer Monomere umfasst, ausgewählt aus der Gruppe, bestehend aus Urushiol, Laccol und Thitsiol, und die Formmasse ein Pulver ist, das durch ein Sieb der Maschenzahl 10-300 passiert.

6. Verfahren zum Herstellen einer pulverförmigen Formmasse, umfassend einen Schritt des dreidimensionalen Knetens, während des Erwärmens, von Rohmaterialien, umfassend 10-85 Masse% Lack, 10-85 Masse% Pflanzenfasern und 5-50 Masse% eines Formzusatzes, so dass ein Teil einer Hauptkomponente des Lacks thermisch polymerisiert wird, wobei die Hauptkomponente des Lacks ein oder mehrere Typen ist, ausgewählt aus der Gruppe, bestehend aus Urushiol, Laccol und Thitsiol.

7. Formartikel, erhalten durch Formpressen einer Formmasse nach einem der Ansprüche 1 bis 5.

8. Formartikel nach Anspruch 7, wobei ferner Erwärmen durchgeführt wird, so dass die Hauptkomponente des Lacks vollständig aushärtet.

## Revendications

1. Matériau de moulage en poudre obtenu par un malaxage tridimensionnel, tout en chauffant, de matériaux bruts comprenant 10-85% en masse de laque, 10-85% en masse de fibres végétales et 5-50% en masse d'un additif de moulage, de sorte qu'une partie d'un composant majeur de la laque est thermiquement polymérisée, où le composant majeur de la laque est un ou plusieurs types choisis dans le groupe constitué d'urushiol, de laccol et de thitsiol.

2. Matériau de moulage selon la revendication 1, dans lequel les fibres végétales sont une poudre d'une taille de particules de 10-300 mailles.

3. Matériau de moulage selon l'une quelconque des revendications 1 et 2, dans lequel l'additif de moulage est un ou plusieurs types choisis dans le groupe constitué d'un matériau thermiquement conducteur et d'une résine thermodurcissable.

4. Matériau de moulage selon la revendication 3, dans lequel le matériau thermiquement conducteur est un ou plusieurs types choisis dans le groupe constitué de matériaux à base de carbone, poudre de diamant, argent, cuivre, or, aluminium, silicium, laiton, fer, platine, oxyde de titane et acier inoxydable.

5. Matériau de moulage en poudre selon l'une quelconque des revendications 1 à 4, dans lequel la laque comprend un polymère d'un ou de plusieurs monomères choisis dans le groupe constitué d'urushiol, de laccol et de thitsiol et le matériau de moulage est une poudre qui passe à travers un tamis de 10-300 mailles.

6. Méthode pour la fabrication d'un matériau de moulage en poudre, comprenant une étape de malaxage tridimensionnel, tout en chauffant, de matériaux bruts incluant 10-85% en masse de laque, 10-85% en masse de fibres végétales et 5-50% en masse d'un additif de moulage, de sorte qu'une partie d'un composant majeur de la laque est thermiquement polymérisée, où le composant majeur de la laque est un ou plusieurs types choisis dans le groupe constitué d'urushiol, de laccol et de thitsiol.

7. Article moulé obtenu par un moulage par compression d'un matériau de moulage selon l'une quelconque des revendications 1 à 5.

8. Article moulé selon la revendication 7, dans lequel le chauffage est effectué en outre pour que le composant majeur de la laque soit complètement durci.
